# EUROPÄISCHE PATENTSCHRIFT

(11) **EP 0 499 581 B1**
(45) Veröffentlichungstag und Bekanntmachung des Hinweises auf die Patenterteilung: **09.07.1997**
(21) Anmeldenummer: 92810076.7
(22) Anmeldetag: 04.02.1992
(51) Int. Cl.: C08L 51/04

(54) **Stabilisierte Polymermischung**
Stabilized polymer composition
Composition de polymères stabilisée

(30) Priorität: 13.02.1991 CH 442/91
(43) Veröffentlichungstag der Anmeldung: 19.08.1992
(73) Patentinhaber: Ciba Specialty Chemicals Holding Inc., 4057 Basel (CH)
(72) Erfinder: Gilg, Bernard, Dr., I-68300 St. Louis-la-Chaussée (FR); Schmitter, André, Dr., F-68220 Hegenheim (FR); Rytz, Gerhard, Dr., CH-3150 Schwarzenburg (CH); Stauffer, Werner, CH-1700 Fribourg (CH); Clauss, Margot, Dr., F-68400 Riedisheim (FR)

(56) Entgegenhaltungen:
- EP-A- 0 285 293
- EP-A- 0 389 420
- CHEMICAL ABSTRACTS, vol. 110, no. 4, Columbus, Ohio, US; abstract no. 24464,

## Beschreibung

Die vorliegende Erfindung betrifft gegen Lichtschädigung stabilisierte Polymermischungen.

Die Verwendung von Lichtschutzmittel, insbesondere sterisch gehinderter Amine, zum Stabilisieren von Polymeren gegen die schädigenden Wirkungen von Licht ist in einer Vielzahl von Publikationen beschrieben, so z.B. auch in EP-A-285 293 Dort wird ein Verfahren zur Herstellung von Antioxydans-Masterbatches, die ein Sterisch gehindertes Amin tragendes Propfpolymeres enthalten, vorgeschlagen. Es ist aber auch bekannt, dass gerade die sterisch gehinderten Amine zum Lichtschutz gewisser Polymere ungeeignet sind. Dies ist auf die Reaktivität solcher Polymere gegenüber Basen zurückzuführen. Ein bekanntes Beispiel eines nicht mit sterisch gehinderten Aminen stabilisierbaren Polymers ist Polycarbonat.

Ueberraschenderweise wurde nun gefunden, dass man auch gegen Basen reaktive Polymere mit sterisch gehinderten Aminen Lichtschutz verleihen kann, wenn diese Amine in geeigneter Form vorliegen und so dem zu stabilisierenden Polymeren zugemischt werden. Zugleich lassen sich Amine in dieser Form auch zur Stabilisierung jener Polymere verwenden, die bekanntermassen mit sterisch gehinderten Aminen auf herkömmliche Weise schützbar waren.

Gegenstand der vorliegenden Erfindung ist somit eine Polymermischung, die (a) ein Copolymer aus Styrol oder α-Methylstyrol und mindestens einem Comonomer, wobei das Copolymer vernetzte Elastomerteilchen enthält, welche durch Copolymerisation mit einem ungesättigten Derivat eines sterisch gehinderten Amins modifiziert sind, und (b) ein gegenüber Basen relatives thermoplastisches Polymer enthält.

Gegenstand der vorliegenden Erfindung ist auch ein Verfahren zur Herstellung der erfindungsgemässen Polymermischung sowie die Verwendung der oben definierten Komponente (a) zum Stabilisieren von Polymeren gegen Lichtschädigung.

Komponente (a) in der erfindungsgemässen Polymermischung ist aus der EP-A-337 431 bekannt. Es handelt sich hierbei vorzugsweise um Pfropfcopolymere von Styrol oder α-Methylstyrol und mindestens einem Comonomeren auf dem modifizierten vernetzten Elastomer.

Das Comonomer kann eine beliebige polymerisierbare ungesättigte Verbindung sein, beispielsweise ein Acrylsäure-, Methacrylsäure- oder Maleinsäurederivat oder ein Styrolderivat. Bevorzugt ist das Comonomere Acrylnitril oder Alkylacrylat oder Alkylmethacrylat mit 1 bis 4 Kohlenstoffatomen im Alkylteil, insbesondere Methylacrylat oder Methylmethacrylat. Es können auch zwei Comonomere verwendet werden, z.B. Gemische von Acrylnitril und Methylmethacrylat oder Gemische von Acrylnitril oder Methylmethacrylat mit kleinen Mengen an Vinylacetat, Butylacrylat oder Maleinsäureestern.

Bevorzugt handelt es sich bei den Copolymeren um solche aus Styrol und Acrylnitril oder Styrol und Methylmethacrylat.

Das Elastomer kann ein beliebiges für Pfropfcopolymerisationen geeignetes Elastomer sein. Beispiele hierfür sind Polybutadien, Butadien-Acrylnitril-Copolymere, Butadien-Styrol-Copolymere, Ethylen-Propylen-Dienterpolymere oder Polybutylacrylat und dessen Copolymere. Bevorzugt ist das Elastomer Polybutadien. Die Herstellung dieser Elastomerteilchen geschieht nach bekannten Verfahren, wie durch Massepolymerisation oder Suspensionspolymerisation, insbesondere aber durch Emulsionspolymerisation. Die Elastomerteilchen sind schwach vernetzt und haben im allgemeinen einen durchschnittlichen Durchmesser von 0,1 bis 50 µm, vorzugsweise 0,5 bis 5 µm. Besonders hervorzuheben sind Teilchen mit einem durchschnittlichen Durchmesser von 0,03 bis 10 µm, vorzugsweise 0,05 bis 1 µm.

Die Modifikation des Elastomeren mit dem sterisch gehinderten Amin erfolgt durch Copolymerisation oder Pfropfung. Die Copolymerisation kann bei der Herstellung des Elastomeren geschehen oder als Pfropfpolymerisation auf das vernetzte Elastomer. Die Pfropfung mit dem sterisch gehinderten Amin kann gleichzeitig mit der Pfropfung mit dem Styrol/ Comonomer-Gemisch erfolgen. Vorzugsweise verfährt man in zwei Schritten, indem man zuerst das ungesättigte Derivat des sterisch gehinderten Amins aufpfropft und anschliessend das Styro/Comonomer-Gemisch. Die Pfropfpolymerisation erfolgt vorzugsweise in Emulsion.

Als ungesättigtes Derivat eines sterisch gehinderten Amins wird vorzugsweise ein copolymerisierbares ungesättigtes Derivat des 2,2,6,6-Tetramethylpiperidins verwendet. Hierbei kann sich die ungesättigte Gruppe in einem Substituenten in 4-Stellung und/oder 1-Stellung des Piperidinringes befinden. Beispiele für ungesättigte Gruppen sind vor allem Acryloyl- und Methacryloylgruppen, ferner Maleinsäuregruppen, Vinyläther- und Allylethergruppen, Allylaminogruppen oder Crotonylgruppen.

Bevorzugt verwendet man zur Copolymerisation mit dem Elastomer eine Verbindung der Formel I, 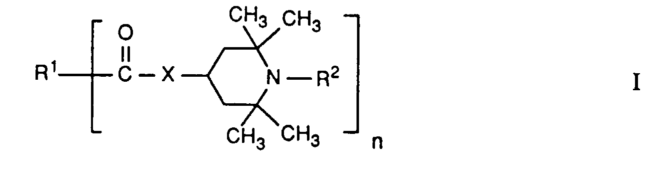 worin n 1 oder 2 ist und X -O- oder -N(R³)- bedeutet,
- R¹: bei n=1 C₁-C₁₈-Alkyl, C₂-C₂₀-Alkenyl, C₅-C₈-Cycloalkyl, C₇-C₉-Phenylalkyl, Phenyl, durch Halogen, C₁-C₄-Alkyl oder C₁-C₄-Alkoxy substituiertes Phenyl oder eine Gruppe R⁴ OOC-CH=CH- bedeutet,
und bei n=2 C₂-C₁₀-Alkylen, Vinylen, C₆-C₁₂-Arylen oder Cyclohexylen bedeutet,
- R²: Wasserstoff, C₁-C₁₂-Alkyl, C₃-C₅-Alkenyl, C₇-C₉-Phenylalkyl, C₁-C₁₈-Alkoxy, -O·, C₅-C₈-Cycloalkoxy, C₇-C₉-Phenylalkoxy, C₂-C₁₀-Alkanoyl, C₃-C₆-Alkenoyl oder eine Gruppe der Formel III 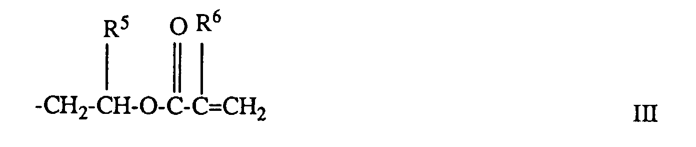 bedeutet,

R³ Wasserstoff, C₁-C₁₂-Alkyl oder C₅-C₈-Cycloalkyl bedeutet.
R⁴ Wasserstoff oder C₁-C₁₂-Alkyl bedeutet,
R⁵ Wasserstoff, CH₃ oder CN bedeutet und
R⁶ Wasserstoff, C₁-C₁₂-Alkyl oder Phenyl bedeutet,
wobei mindestens einer der Substituenten R¹ und R² eine äthylenische Doppelbindung enthält.

Bevorzugt verwendet man auch die Verbindungen der Formel II, 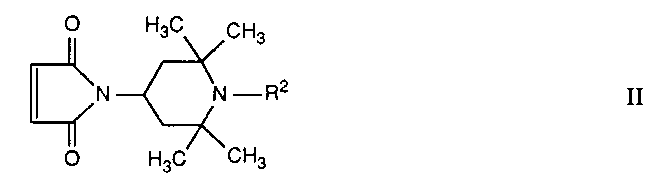 worin R² Wasserstoff, C₁-C₁₂-Alkyl, C₃-C₅-Alkenyl, C₇-C₉-Phenylalkyl, C₁-C₁₈-Alkoxy, -O·, C₅-C₈-Cycloalkoxy, C₇-C₉-Phenylalkoxy oder C₂-C₁₀-Alkanoyl bedeutet.

Unter den Verbindungen der Formel I sind bevorzugt
a) diejenigen, worin n 1 ist, X -O- ist, R¹ C₂-C₅-Alkenyl ist und R² Wasserstoff, C₁-C₄-Alkyl, Allyl, Benzyl oder Acetyl bedeutet,
b) diejenigen, worin n 1 oder 2 ist, X -O- ist, R¹ bei n=1 C₁-C₁₈-Alkyl, Cyclohexyl oder Phenyl und bei n=2 C₂-C₈-Alkylen bedeutet und R² C₃-C₆-Alkenoyl bedeutet,
c) diejenigen, worin n 1 ist, X -O- ist, R¹ C₂-C₅-Alkenyl ist und R² eine Gruppe der Formel III ist, worin R⁵ und R⁶ Wasserstoff oder CH₃ bedeuten.

Besonders bevorzugt ist das 1,2,2,6,6-Pentamethyl-4-acryloyloxypiperidin.

In diesen Formeln können R¹, R², R³, R⁴ und R⁶ als Alkyl unverzweigt oder verzweigt sein. Beispiele hierfür sind Methyl, Ethyl, n-Propyl, iso-Propyl, n-Butyl, sec.Butyl, tert.Butyl, iso-Pentyl, n-Hexyl, n-Octyl, 2-Ethylhexyl, n-Decyl, iso-Undecyl oder n-Dodecyl. R¹ als Alkyl kann beispielsweise auch Tetradecyl, Hexadecyl oder Octadecyl sein.

R¹ als C₂-C₅-Alkenyl kann z.B. Vinyl, Propenyl, iso-Propenyl, Butenyl oder Pentenyl sein, insbesondere Vinyl und 2-Propenyl (iso-Propenyl). R² als C₃-C₅-Alkenyl ist vorzugsweise Allyl.

R¹ und R³ als C₅-C₈-Cycloalkyl können z.B. Cyclopentyl, Cyclohexyl oder Cyclooctyl sein, insbesondere aber Cyclohexyl.

R¹ und R² als C₇-C₉-Phenylalkyl können z.B. Benzyl, Phenylethyl oder Phenylpropyl sein, insbesondere aber Benzyl.

R² als C₁-C₁₈-Alkoxy kann insbesondere C₆-C₁₀-Alkoxy sein, als C₅-C₈-Cycloalkoxy insbesondere Cyclohexyloxy und als C₇-C₉-Phenylalkoxy insbesondere Benzyloxy oder Phenyläthoxy.

R² als C₂-C₁₀-Alkanoyl kann z.B. Acetyl, Propionyl, Butyroyl, iso-Butyroyl, n-Pentanoyl, tert.Pentanoyl, Hexanoyl, Octanoyl oder iso-Decanoyl sein, insbesondere aber Acetyl. R² als C₃-C₆-Alkenoyl ist insbesondere Acryloyl oder Methacryloyl.

R¹ als C₂-C₁₀-Alkylen kann z.B. Di-, Tri-, Tetra-, Hexa-, Octa-, Decamethylen, 2,2-Dimethyltrimethylen oder 1,3,3-Trimethyltetramethylen sein.

R¹ als C₆-C₁₂-Arylen kann z.B. Phenylen, Naphthylen oder Diphenylen sein, insbesondere Phenylen.

Alle Verbindungen der Formeln I und II enthalten mindestens eine äthylenische Doppelbindung, auf Grund derer die Verbindung zur Copolymerisation befähigt ist. Die Verbindungen können aber auch zwei Doppelbindungen enthalten. Solche Verbindungen werden bevorzugt während der Herstellung des Elastomeren copolymerisiert.

### Beispiele für Verbindungen der Formel I sind:

1,2,2,6,6-Pentamethyl-4-piperidinyl-acrylat, -methacrylat oder -crotonat,
2,2,6,6-Tetramethyl-4-piperidinyl-acrylat, -methacrylat oder -crotonat,
1-Allyl-2,2,6,6-tetramethyl-4-piperidinyl-acrylat, -methacrylat oder -crotonat,
1-Benzyl-2,2,6,6-tetramethyl-4-piperidinyl-acrylat, -methacrylat oder -crotonat,
N-(2,2,6,6-Tetramethyl-4-piperidinyl)-acrylamid,
N-Methyl-N-(1,2,2,6,6-pentamethyl-4-piperidinyl)-methacrylamid,
N-Butyl-N-(1,2,2,6,6-pentamethyl-4-piperidinyl)-acrylamid,
Monoethyl-mono(1,2,2,6,6-pentamethyl-4-piperidinyl)-maleinat,
Di(2,2,6,6-tetramethyl-4-piperidinyl)-fumarat,
Monohexylmaleinat-N-(2,2,6,6-tetramethyl-4-piperidinyl)-N-butylamid,
N,N'-Di(1,2,2,6,6-pentamethyl-4-piperidinyl)-N,N'-dibutyl-maleindiamid,
1-Acryloyl-2,2,6,6-tetramethyl-4-acetoxypiperidin,
1-Methacryloyl-2,2,6,6-tetramethyl-4-butyroyloxypiperidin,
1-Crotonyl-2,2,6,6-tetramethyl-4-benzoyloxypiperidin,
1-Acryloyl-2,2,6,6-tetramethyl-4-acryloyloxypiperidin,
1-Methacryloyl-2,2,6,6-tetramethyl-4-methacryloyloxypiperidin,
1-Acryloyl-2,2,6,6-tetramethyl-4-(4-chlorbenzoyloxy)-piperidin,
Di(1-acryloyl-2,2,6,6-tetramethyl-4-piperidinyl)-sebacat,
Di(1-methacryloyl-2,2,6,6-tetramethyl-4-piperidinyl)-adipat,
Di(1-acryloyl-2,2,6,6-tetramethyL-4-piperidinyl)-succinat,
Di(1-crotonoyl-2,2,6,6-tetramethyl-4-piperidinyl)-phthalat,
N-(1-Acryloyl-2,2,6,6-tetramethyl-4-piperidinyl)-acetamid,
N-(1-Acryloyl-2,2,6,6-tetramethyl-4-piperidinyl)-N-butyl-benzamid,
N,N'-Di(1-methacryloyl-2,2,6,6-tetramethyl-4-piperidinyl)-N,N'-dicyclohexyl-isophthalamid,
1-(2-Acryloyloxyethyl)-4-acryloyloxy-2,2,6,6-tetramethylpiperidin,
1-(2-Methacryloyloxyethyl)-4-methacryloyloxy-2,2,6,6-tetramethylpiperidin,
1-(2-Acryloyloxypropyl)-4-acryloyloxy-2,2,6,6-tetramethylpiperidin.

### Beispiele für Verbindungen der Formel II sind:

N-(2,2,6,6-Tetramethyl-4-piperidinyl)-maleinimid,
N-(1,2,2,6,6-Pentamethyl-4-piperidinyl)-maleinimid,
N-(1-Benzyl-2,2,6,6-tetramethyl-4-piperidinyl)-maleinimid,
N-(1-Acetyl-2,2,6,6-tetramethyl-4-piperidinyl)-maleinimid.

Die erfindungsgemäss verwendbaren ungesättigten Derivate von sterisch gehinderten Aminen sind jedoch keineswegs auf Verbindungen der Formel I und II beschränkt. Im Prinzip lässt sich jedes ungesättigte Derivat eines sterisch gehinderten Amins verwenden, soweit es zur Copolymerisation mit der Elastomer-Komponente befähigt ist.

Das ungesättigte sterisch gehinderte Amin kann allein oder zusammen mit anderen ungesättigten Verbindungen copolymerisiert werden. Beispiele für solche Comonomere sind Alkylacrylate, Alkylmethacrylate, Acryl- und Methacrylamide, Acrylnitril oder Methacrylnitril.

Das Gemisch von Styrol oder α-Methylstyrol und dem Comonomer kann gemeinsam mit dem ungesättigten Derivat eines sterisch gehinderten Amins auf die Elastomerteilchen aufgepfropft werden. Vorzugsweise führt man die Pfropfcopolymerisation in zwei Schritten durch. Im ersten Schritt pfropft man das ungesättigte sterisch gehinderte Amin allein oder zusammen mit anderen ungesättigten Verbindungen auf das Elastomere auf. In einem zweiten Schritt wird darauf das Gemisch von Styrol oder α-Methylstyrol und dem Comonomer aufgepfropft.

Alternativ können die mit dem ungesättigten sterisch gehinderten Amin gepfropften Elastomerteilchen in einem zweiten Schritt mit einem separat hergestellten Styrol- bzw. α-Methylstyrol-Copolymer vermischt werden. Bevorzugt wird jedoch die Styrolphase auf das modifizierte Elastomer aufgepfropft.

Offensichtlich reagiert das ungesättigte sterisch gehinderte Amin mit vorhandenen Doppelbindungen auf dem vernetzten Elastomerteilchen. Es wird auf die Oberfläche des Elastomerkügelchens aufgepfropft. Dabei kann das gepfropfte Amin das Elastomerteilchens ganz oder teilweise umhüllen. Wenn man dann zusätzlich Styrol und Comonomer, z.B. Acrylnitrile aufpfropft, wird dieses das gesamte Elastomerteilchen umhüllen und gegebenenfalls auch noch die freien Stellen auf der Oberfläche des Elastomerteilchens besetzen (= Komponente (a)). Auf dies Weise wird der direkte Kontakt zwischen Amin und thermoplastischem Polymer (= Komponente (b)) vermieden.

Durch elektronenmikroskopische Aufnahme ist die "Core-shell" Struktur der umhüllten Elastomerteilchen deutlich zu erkennen, aber es ist nicht möglich zwischen Amin und Styrolcopolymer zu unterscheiden.

Die Copolymerisation bzw. Pfropfcopolymerisation geschieht nach den hierfür üblichen Verfahren. Einzelheiten hierüber sind z.B. in der oben erwähnten EP-A-337 431 enthalten. Es wird ferner darin beschrieben, dass den so stabilisierten Copolymeren noch andere bekannte Stabilisatoren zugesetzt werden können, beispielweise Antioxidantien, UV-Absorber und weitere Lichtschutzmittel, ferner die in der Kunststofftechnologie üblichen Zusätze wie Pigmente, Füllstoffe, Verstärkungs- und Gleitmittel.

Als Komponente (b) kommen beispielsweise in Frage:
1. Halogenhaltige Polymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
2. Polymere, die sich von α,β-ungesättigten Säuren und deren Derivaten ableiten, wie Polyacrylate und Polymethacrylate, Polyacrylamide und Polyacrylnitrile.
3. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.
4. Homo- und Copolymere von cyclischen Ethern, wie Polyalkylenglykole, Polyethylenoxyd, Polypropylenoxyd oder deren Copolymere mit Bisglycidylethern.
5. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
6. Polyphenylenoxide und -sulfide und deren Mischungen mit Styrolpolymeren oder Polyamiden.
7. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
8. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid.
9. Polyharnstoffe, Polyimide, Polyamid-imide und Polybenzimidazole.
10. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
11. Polycarbonate und Polyestercarbonate.

Bei Komponente (b) handelt es sich vorzugsweise um solche Polymere, die sich mit sterisch gehinderten Aminen nur schwerlich oder nicht stabilisieren lassen wie Polycarbonat, Polyamid, Polyester, insbesondere Polybutylenterephthalat; Polyvinylchlorid, Polyphenylenoxid, thermoplastisches Polyurethan oder Styrolmaleinsäureanhydridcopolymer oder auch um Mischungen aus den genannten Polymeren. Insbesondere ist Komponente (b) Polycarbonat.

Die Anteile an Komponente (a) und Komponente (b) in der erfindungsgemässen Polymermischung können innerhalb weiter Grenzen schwanken. Vorzugsweise macht Komponente (a) 5 bis 95, insbesondere 10 bis 50 Gewichtsprozent der Polymermischung aus.

Es kann vorteilhaft sein, wenn der Polymermischung noch andere, bekannte Stabilisatoren zugesetzt werden. Beispiele hierfür sind die folgenden Klassen von Stabilisatoren:
1. Antioxidantien
   1.1. Alkylierte Monophenole, z.B. 2,6-Di-tert.butyl-4-methylphenol, 2-Tert.butyl-4,6-di-methylphenol, 2,6-Di-tert.butyl-4-ethylphenol, 2,6-Di-tert.butyl-4-n-butylphenol, 2,6-Ditert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
   1.2. Alkylierte Hydrochinone, z.B. 2,6-Di-tert.butyl-4-methoxyphenol, 2,5-Di-tert.butylhydrochinon, 2,5-Di-tert.amyl-hydrochinon, 2,6-Diphenyl-4-octadecyloxyphenol.
   1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
   1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.
   1.5 Benzylverbindungen, z.B. 1,3,5-Tris-(3,5-di-tert.butyl-4-hydroxy-benzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
   1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.-butyl-4-hydroxyphenyl)-carbaminsäureoctylester.
   1.7. Ester der β-(3,5-Di-tert.butyl-4-hydroxyphenyl)-propionsäure mit ein- oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
   1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.-butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodrukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).
   2.7. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

Weiterhin können sonstige in der Kunststoff-Technologie übliche Hilfsmittel zugesetzt werden, wie z.B. Pigmente, Füllstoffe, Verstärkungsmittel, Gleitmittel, Flammschutzmittel, Antistatica oder Treibmittel.

Als weitere Komponente (c) für die erfindungsgemässe Polymermischung können insbesondere UV-Absorber, vorzugsweise die oben genannten 2-(2'-Hydroxyphenyl)-benztriazole, mit Erfolg verwendet werden.

Bei der Herstellung der erfindungsgemässen Polymermischungen geht man von den Komponenten (a) und (b) aus und vermischt diese auf übliche Weise miteinander. Dabei wird Komponente (a) bevorzugt so - wie in der genannten EP-A-337 431 beschrieben - hergestellt, dass zuerst auf die Elastomerteilchen ein ungesättigtes Derivat eines sterisch gehinderten Amins aufgepfropft, auf die so modifizierten Elastomerteilchen ein Gemisch aus Styrol oder α-Methylstyrol und mindestens einem Comonomer aufgepfropft und dem so erhaltenen Copolymeren ein thermoplastisches Polymer auf übliche Weise zugemischt wird.

Das folgende Beispiel erläutert die Erfindung weiter. Verhältnisse und Angaben in Prozenten beziehen sich auf das Gewicht.

Beispiel 1: In einem 3 l-Reaktionsgefäss werden 933 g Polybutadienlatex (BR) mit 59 % Feststoffgehalt (Baystal® 2004 D), 848,5 g deionisiertes Wasser, 2,5 g Kaliumpersulfat und 0,1 g tert-Dodecylmercaptan vorgelegt, viermal entgast, unter Argon bei 100 Umdrehungen/Minute gerührt und innerhalb 30 Minuten auf 65°C erwärmt. Man beginnt dann die Zugabe von 4-Acryloyloxy-1,2,2,6,6-pentamethylpiperidin (APP). In ca. einer Stunde wird die gesamte Menge von APP (57,9 g) zudosiert. Nach 3-stündiger Polymerisationszeit wird der Latex auf Raumtemperatur abgekühlt.

In einem 3 l-Rührgefäss wird zu 1675 g des so erhaltenen Latex (= 500 g BR und 52,7 g APP) eine Kaliumpersulfat-Lösung (5 g Kaliumpersulfat gelöst in 200 g Wasser) zugegeben, viermal entgast und unter Argon in einer halben Stunde auf 65°C erhitzt. In ca. 4 Stunden werden gleichzeitig 250 g einer 4%igen wässrigen Emulgatorlösung (Dresinate® 731) und 500 g der Monomerenmischung aus Styrol und Acrylnitril (2:1) und 1 g tert-Dodecylmercaptan zudosiert. Nach der Zugabe wird die Polymerisation noch eine Stunde bei 65°C mit einer Rührgeschwindigkeit von 100 Umdrehungen/Minute weitergeführt.

Dem erhaltenen Latex werden 6,45 g einer wässrigen Emulsion des Antioxidans der Formel 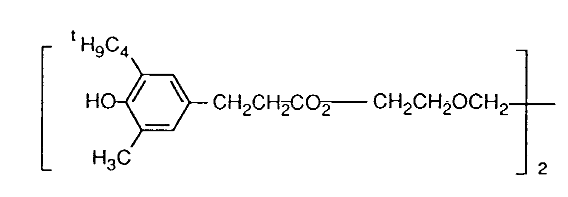 zugesetzt. Danach wird über Glaswolle filtriert.

Zur Koagulation des Latex werden 5 l Wasser und 20 g Essigsäure auf 85 bis 90°C erhitzt und die Emulsion zügig zugegeben bei einer Rührgeschwindigkeit von ca. 300 Umdrehungen/Minute. Zur Vervollständigung der Koagulation wird 10 Minuten bei 90°C gerührt. Das ausgefallene Copolymer wird heiss abfiltriert. Man erhält 950 g ABS-Copolymer als weisses Pulver, das 5 % eingebautes APP enthält.

Dieses Copolymer wird in Pulverform mit derselben Menge von Styrolacrylnitril-copolymer (Suspension SAN, Ube Cycon) und der doppelten Menge von pulverförmigem Polycarbonat (PC 135, General Electric), mit gegebenenfalls weiteren Additiven, wie z.B. einem UV-Absorber, in einem Rhönrad vermischt. Die Mischung wird in einem Zweischnecken-Extruder (Temperatur-Zyklus: 165°C, 250°C, 275°C, 275°C, 270°C; Umdrehungen/Minute: 45) hergestellt.

Die erhaltenen Mischungen werden in einer Heizpresse bei 200°C zu 2 mm starken Platten gepresst. Aus den Platten werden Prüfkörper von 40 x 40 x 2 mm ausgeschnitten. Diese werden in einem Weather-O-meter® WRC 600 mit UV-Licht belichtet. In regelmässigen Abständen werden Proben entnommen und deren Vergilbung gemäss ASTM D 1925 gemessen.

Die mit der Belichtungszeit einhergehende Vergilbung, ausgedrückt in ΔYI (YI = Yellowness Index; ΔYI = Unterschied in YI-Wert zwischen unbelichteter und entsprechender belichteter Probe) und nach der angegebenen Methode ermittelt, ist in der Tabelle 1 wiedergegeben.

**Tabelle 1:**

| Additiv | Δ YI nach Belichtungszeit von | | | | |
|---|---|---|---|---|---|
| | 250 h | 500 h | 1000 h | 1250 h | 1500 h |
| ohne | 1,1 | 6,8 | 15,2 | 20 | 22 |
| 0,3 % UV- Absorber * | -7,0 | -3,0 | 7,5 | 12,1 | 14,9 |
| 1,25 % APP gepfropft | -2,3 | 1,3 | 7,9 | 13,4 | 15,9 |
| 1,25 % APP gepfropft + 0,3 % UV-Absorber* | -13,3 | -12,6 | -4,5 | 2,9 | 6,6 |

(Prozente sind auf das gesamte Polymergewicht [Komponente (a) und Komponente (b)] bezogen)

Der UV-Absorber* der Formel 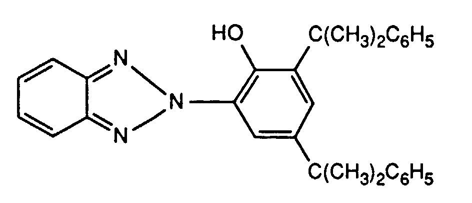 dient als Vergleich beziehungsweise wird der Pulvermischung zugegeben.

Die erfindungsgemässen Zusammensetzungen zeigen im Vergleich zur gleichen Polymermischung, die jedoch kein gepfropftes APP enthält, eine deutlich höhere Stabilität gegen Vergilbung.

Beispiel 2: Das ABS-Copolymer gemäss Beispiel 1 wird in Pulverform mit derselben Menge von Styrolacrylnitril-Copolymer (Suspension SAN, Kostil, Montedipe), mit gegebenenfalls weiteren Additiven, wie z.B. einem UV-Absorber (Tinuvin® 234, Ciba-Geigy AG) und einem Phosphit (Irgafos® 168, Ciba-Geigy AG), in einem Rhönrad vermischt. Die Mischung wird in einem Zweischnecken-Extruder (Temperatur-Zyklus : 210°C/ 210°C/ 215°C/ 220°C) verarbeitet und granuliert.

Das erhaltene ABS-Granulat wird mit derselben Menge von Polycarbonat-Granulat (PC Calibre®, Dow) vermischt. Das Polymerblend wird in einem Zweischnecken-Extruder (Temperatur Zyklus : 240°C/ 240°C/ 250°C) hergestellt.

Die erhaltenen Mischungen (Blends) werden in einer Heizpresse bei 200°C zu 2 mm starken Platten gepresst. Aus den Platten werden Prüfkörper von 40 x 40 x 2 mm ausgeschnitten. Diese Plättchen werden in einem Weather-Ometer® WRC 600 mit UV-Licht belichtet. In regelmässigen Abständen werden Proben entnommen und deren Vergilbung (oder Yellowness Index) gemäss Methode ASTM D 1925 gemessen.

Die mit der Belichtungszeit einhergehende Vergilbung is in der Tabelle 2 wiedergegeben.

Weitere Prüfkörper von 12,7 x 60,0 x 2,0 mm werden in einem Xenotest 450 mit UV-Licht belichtet. In regelmässigen Abständern werden Proben entnommen und deren Schlagbiegefestigkeit gemäss Methode ASTM D 4508-85 gemessen. Dabei erfolgt der Pendelschlag auf die belichtete Seite der Probe.

In Tabelle 3 ist die für den Bruch der Probe erforderliche Energie angegeben. Je höher dieser Wert ist, desto höher ist die Schlagbiegefestigkeit der Probe. Bei ungeschädigten Proben erfolgt kein Bruch.

**Tabelle 2:**

| Additiv | Δ (YI) nach Belichtungszeit von | | | | |
|---|---|---|---|---|---|
| | 500 h | 1000 h | 2000 h | 3000 h | 4000 h |
| ohne | 14 | 25 | 39 | | |
| 0,50 % TINUVIN® 234 | -7 | 1,1 | 16,1 | 23,4 | 23,9 |
| 1,25 % APP gepfroft 0,50 % TINUVIN® 234 | -24,3 | -16,8 | -7,3 | 2,3 | 3,0 |

**Tabelle 3:**

| | Schlagbiegefestigkeit in kJ/m² nach | | | | | | |
|---|---|---|---|---|---|---|---|
| Additiv | 200 | 300 | 500 | 1000 | 1500 | 1800 | 2000 |
| | Stunden in Xenotest 450 | | | | | | |
| ohne | 14±2 | 13±1 | | | | | |
| 0,50 % TINUVIN® 234 | KB | 15±2 | 13±1 | 11±1 | 11±1 | | |
| 1,25% APP gepfroft 0,50 % TINUVIN® 234 | KB | KB | KB | KB | KB | KB | 60 |
| KB = Kein Bruch | | | | | | | |

Beispiel 3: Das ABS-Copolymer Granulat gemäss Beispiel 2 wird mit derselben Menge Polybutylenterephtahlat, (PBT CRASTIN® S 600, Ciba-Geigy) vermischt. Das Polymerblend wird in einem Zweischnecken-Extruder (Temperatur-Zyklus: 210°C/230°C/ 235°C/ 240°C) hergestellt. Proben von 12,7 x 60,0 x 2,0 mm werden in einer Arburg-Spritzgussanlage gespritzt bei einer maximalen Verarbeitungstemperatur von 260°C. Diese Plättchen werden in einem Ofen bei 200°C und bei 160°C gealtert. In regelmässigen Abständen werden die Proben entnommen und deren Vergilbung gemäss ASTM D 1925 gemessen.

Die Resultate sind in den Tabellen 4 und 5 dargestellt:

**Tabelle 4:**

| Stabilisierung | Δ YI nach Ofenalterung bei 200°C nach | | | | |
|---|---|---|---|---|---|
| | 10 min | 20 min | 40 min | 60 min | 90 min |
| ohne | 5,6 | 20,1 | 37,4 | 49,5 | 61,6 |
| 0,50 % TINUVIN® 234 | 6,0 | 16,4 | 33,1 | 43,9 | 55,3 |
| 1,25 % APP gepfropft | 2,0 | 5,9 | 15,1 | 25,2 | 40,6 |
| 1,25 % APP gepfropft + 0,50 % TINUVIN® 234 | 2,1 | 5,9 | 17,5 | 23,5 | 36,4 |

**Tabelle 5:**

| Stabilisierung | Δ YI nach Ofenalterung bei 160°C nach | | | | |
|---|---|---|---|---|---|
| | 60 min | 90 min | 120 min | 160 min | 840 min |
| ohne | 4,5 | 8,6 | 16,0 | 22,7 | 64,6 |
| 0,50 % TINUVIN® 234 | 4,7 | 10,8 | 11,6 | 20,4 | 56,3 |
| 1,25 % APP gepfropft | 3,2 | 3,6 | 4,1 | 8,9 | 27,0 |
| 1,25 % APP gepfropft + 0,50 % TINUVIN® 234 | 3,6 | 3,6 | 3,8 | 8,4 | 24,0 |

Beispiel 4: Gepfropftes ABS mit 5 % APP wie in Beispiel 1 hergestellt wird mit derselben Menge Polyvinylchlorid (PVC, SOLVIC® SA 250, Solvay), 4 % eines Gleitmittels (Loxiol® VGS 1809, Loxiol® G 70 S, Hoechst), 2 % eines Hitzestabilisators (D26-376, Ciba-Geigy AG), und gegebenenfalls 0,25 % eines UV-Absorbers (Tinuvin® 320, Ciba-Geigy AG), in einem Rhönrad vermischt. Die Mischungen werden auf einem Zweiwalzen-Mischwerk, 5 Minuten bei 175°C verarbeitet. Die erhaltenen Mischungen werden in einer Heizpresse bei 180°C zu 2 mm starken Platten verpresst. Aus den Platten werden Prüfkörper von 12,7 x 60 x 2 mm ausgeschnitten. Diese Plättchen werden in einem Xenotest 450 mit UV-Licht belichtet. In regelmässigen Abständen werden die Proben entnommen und deren Schlagbiegefestigkeit gemäss ASTM D 4508-85 gemessen. Dabei erfolgt der Pendelschlag auf die belichtete Seite der Probe.

Die Ergebnisse sind in Tabelle 6 aufgeführt.

**Tabelle 6:**

| Stabilisierung | Schlagbiegefestigkeit in kJ/m² nach Belichtungszeit im Xenotest 450 von | | | | | |
|---|---|---|---|---|---|---|
| | 80h | 200h | 350 h | 500 h | 670 h | 720 h |
| ohne | KB | 27±2 | 26±3 | 26±4 | 26±2 | 26±2 |
| 2.50 % APP 0,25% TINUVIN® 320 | KB | KB | 34±4 | 24±2 | 24±1 | 24±1 |
| 2,5 % APP gepfropft | KB | KB | KB | KB | 42±1 | 40±2 |
| 2,5 % APP gepfropft 0,25 % TINUVIN® 320 | KB | KB | KB | KB | RB | 59±1 |
| KB = Kein Bruch RB = Rissbildung | | | | | | |

Weitere Prüfkörper von 40 x 40 x 2 mm werden mit UVA-Licht belichtet. In regelmässigen Abständen werden die Proben herausgenommen und die Vergilbung wird gemäss ASTM D 1925 gemessen.

Die Resultate sind in der Tabelle 7 aufgeführt.

**Tabelle 7:**

| Stabilisierung | Δ(YI) nach UVA Belichtungszeit von | | | | | |
|---|---|---|---|---|---|---|
| | 24 h | 100 h | 170 h | 340 h | 600 h | 770 h |
| ohne | 13 | 28,5 | 36,7 | 46,5 | 56,3 | 62,9 |
| 2,5 % APP gepfropft | 8,5 | 18,3 | 25,1 | 35 | 44,6 | 48,1 |
| 2,5 % APP gepfropft 0,25 % TINUVIN® 320 | -1,8 | -0,2 | 2,5 | 9,3 | 17,8 | 22,3 |

Beispiel 5: Für die Herstellung eines gepfropften ABS, wird wie unter Beispiel 1 beschrieben vorgegangen, mit der Ausnahme, dass 57,9 g 4-Methacryloyloxy-1,2,2,6,6-pentamethylpiperidin (MAPP) als Stabilisator eingesetzt wird.

Es werden 25 % des ABS-Copolymers mit 75 % Polyvinylchlorid (PVC, SOLVIC® 258 RB, Solvay), 4 % eines Gleitmittels (Irgawax® 368, Ciba-Geigy AG), 2 % eines Hitzestabilisators (D 26-376, Ciba-Geigy AG), und gegebenenfalls 0,25 % eines UV-Absorbers (Tinuvin® 320, Ciba-Geigy AG), in einem Rhönrad vermischt. Die Mischungen werden auf einem Zweiwalzen-Mischwerk, 5 Minuten bei 175°C verarbeitet. Die erhaltenen Mischungen werden in einer Heizpresse bei 180°C zu 2 mm starken Platten verpresst. Aus den Platten werden Prüfkörper von 40 x 40 x 2 mm ausgeschnitten. Diese Plättchen werden in einem Ofen bei 190°C gealtert. In regelmässigen Abständen werden die Proben entnommen und deren Vergilbung gemäss ASTM D 1925 gemessen.

Die Ergebnisse sind in Tabelle 8 aufgeführt.

**Tabelle 8:**

| Stabilisierung | Δ(YI) nach Ofenalterung bei 190°C von | | | | | |
|---|---|---|---|---|---|---|
| | 15 min | 30 min | 45 min | 60 min | 90 min | 120 min |
| ohne | 16 | 27,1 | 42,2 | 47,6 | 52,9 | 77,5 |
| 1,25 % MAPP gepfropft | 26,3 | 82,1 | 131,1 | 147,5 | schwarz | |
| 1,25 % MAPP gepfropft 0,25 % TINUVIN® 320 | 25,3 | 67,6 | 112,2 | 120,3 | 121,7 | schwarz |

## Patentansprüche

1. Polymermischung, enthaltend (a) ein Copolymer aus Styrol oder α-Methylstyrol und mindestens einem Comonomer, wobei das Copolymer vernetzte Elastomerteilchen enthält, welche durch Copolymerisation mit einem ungesättigten Derivat eines sterisch gehinderten Amins modifiziert sind, und (b) ein gegenüber Basen reaktives thermoplastisches Polymer.

2. Polymermischung gemäss Anspruch 1, dadurch gekennzeichnet, dass es sich bei Komponente (a) um ein Pfropfcopolymer von Styrol oder α-Methylstyrol und mindestens einem Comonomer auf dem modifizierten vernetzten Elastomer handelt.

3. Polymermischung gemäss Anspruch 1, dadurch gekennzeichnet, dass das Comonomer in Komponente (a) Acrylnitril oder Alkylacrylat oder Alkylmethacrylat mit 1 bis 4 Kohlenstoffatomen im Alkylteil ist.

4. Polymermischung gemäss Anspruch 1, dadurch gekennzeichnet, dass die Elastomerteilchen in Komponente (a) aus einem Butadien-Acrylnitril-Copolymeren, Butadien-Styrol-Copolymeren, Ethylen-Propylen-Dienterpolymeren, Polybutylacrylat oder aus Polybutadien bestehen.

5. Polymermischung gemäss Anspruch 1, dadurch gekennzeichnet, dass das sterisch gehinderte Amin ein copolymerisierbares ungesättigtes Derivat des 2,2,6,6-Tetramethylpiperidins ist.

6. Polymermischung gemäss Anspruch 5, dadurch gekennzeichnet, dass das ungesättigte Derivat des 2,2,6,6-Tetramethylpiperidins eine Verbindung der Formel I ist, 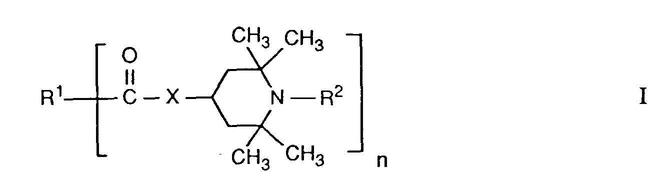 worin n 1 oder 2 ist und X -O- oder -N(R³)- bedeutet,
R¹ bei n=1 C₁-C₁₈-Alkyl, C₂-C₂₀-Alkenyl, C₅-C₈-Cycloalkyl, C₇-C₉-Phenylalkyl, Phenyl, durch Halogen, C₁-C₄-Alkyl oder C₁-C₄-Alkoxy substituiertes Phenyl oder eine Gruppe R⁴ OOC-CH=CH- bedeutet,
und bei n=2 C₂-C₁₀-Alkylen, Vinylen, C₆-C₁₂-Arylen oder Cyclohexylen bedeutet,
R² Wasserstoff, C₁-C₁₂-Alkyl, C₃-C₅-Alkenyl, C₇-C₉-Phenylalkyl, C₁-C₁₈-Alkoxy, -O·, C₅-C₈-Cycloalkoxy, C₇-C₉-Phenylalkoxy, C₂-C₁₀-Alkanoyl, C₃-C₆-Alkenoyl oder eine Gruppe der Formel III 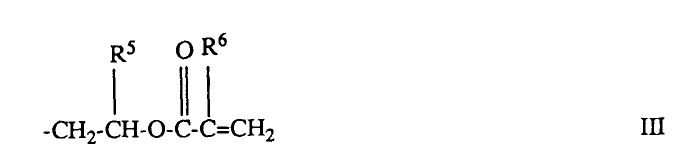 bedeutet,
R³ Wasserstoff, C₁-C₁₂-Alkyl oder C₅-C₈-Cycloalkyl bedeutet.
R⁴ Wasserstoff oder C₁-C₁₂-Alkyl bedeutet,
R⁵ Wasserstoff, CH₃ oder CN bedeutet und
R⁶ Wasserstoff, C₁-C₁₂-Alkyl oder Phenyl bedeutet,
wobei mindestens einer der Substituenten R¹ und R² eine äthylenische Doppelbindung enthält.

7. Polymermischung gemäss Anspruch 5, dadurch gekennzeichnet, dass das ungesättigte Derivat des 2,2,6,6-Tetramethylpiperidins eine Verbindung der Formel II ist, 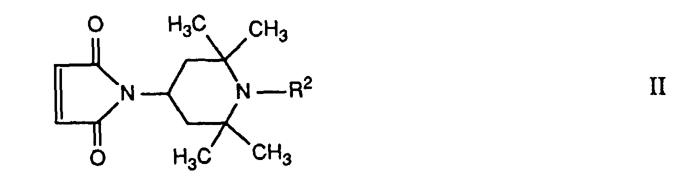 worin R² Wasserstoff, C₁-C₁₂-Alkyl, C₃-C₅-Alkenyl, C₇-C₉-Phenylalkyl, C₁-C₁₈-Alkoxy, -O·, C₅-C₈-Cycloalkoxy, C₇-C₉-Phenylalkoxy oder C₂-C₁₀-Alkanoyl bedeutet.

8. Polymermischung gemäss Anspruch 5, dadurch gekennzeichnet, dass das ungesättigte Derivat des 2,2,6,6-Tetramethylpiperidins eine Verbindung der Formel I ist, worin n 1 ist, X -O- ist, R¹ C₂-C₅-Alkenyl ist und R² Wasserstoff, C₁-C₄-Alkyl, Allyl, Benzyl oder Acetyl bedeutet.

9. Polymermischung gemäss Anspruch 5, dadurch gekennzeichnet, dass das ungesättigte Derivat des 2,2,6,6-Tetramethylpiperidins eine Verbindung der Formel I ist, worin n 1 oder 2 ist, X -O- ist, R¹ bei n=1 C₁-C₁₈-Alkyl, Cyclohexyl oder Phenyl und bei n=2 C₂-C₈-Alkylen bedeutet und R² C₃-C₆-Alkenoyl bedeuteL

10. Polymermischung gemäss Anspruch 5, dadurch gekennzeichnet, dass das ungesättigte Derivat des 2,2,6,6-Tetramethylpiperidins eine Verbindung der Formel I ist, worin n 1 ist, X -O- ist, R¹ C₂-C₅-Alkenyl ist und R² eine Gruppe der Formel III ist, worin R⁵ und R⁶ Wasserstoff oder CH₃ bedeuten.

11. Polymermischung gemäss Anspruch 5, dadurch gekennzeichnet, dass das ungesättigte Derivat des 2,2,6,6-Tetramethylpiperidins 1,2,2,6,6-Pentamethyl-4-acryloyloxypiperidin ist.

12. Polymermischung gemäss Anspruch 1, dadurch gekennzeichnet, dass es sich bei Komponente (b) um Polycarbonat, Polyamid, Polyester, Polyvinylchlorid, Polyphenylenoxid, thermoplastisches Polyurethan oder Styrolmaleinsäureanhydridcopolymer oder auch um Mischungen aus diesen Polymeren handelt.

13. Polymermischung gemäss Anspruch 12, dadurch gekennzeichnet, dass es sich um Polycarbonat handelt.

14. Polymermischung gemäss Anspruch 1, dadurch gekennzeichnet, dass Komponente (a) 5 bis 95 Gewichtsprozent der Polymermischung ausmacht.

15. Polymermischung gemäss Anspruch 14, dadurch gekennzeichnet, dass Komponente (a) 10 bis 50 Gewichtsprozent der Polymermischung ausmacht.

16. Polymermischung gemäss Anspruch 1, dadurch gekennzeichnet, dass sie als weitere Komponente (c) einen UV-Absorber enthält.

17. Polymermischung gemäss Anspruch 16, dadurch gekennzeichnet, dass Komponente (c) ein 2-(2'-Hydroxyphenyl)-benztriazol ist.

18. Verfahren zur Herstellung der Polymermischung gemäss Anspruch 1, dadurch gekennzeichnet, dass man die Komponenten (a) und (b) auf übliche Weise miteinander vermischt.

19. Verfahren gemäss Anspruch 18, dadurch gekennzeichnet, dass zuerst auf die Elastomerteilchen ein ungesättigtes Derivat eines sterisch gehinderten Amins aufgepfropft, auf die so modifizierten Elastomerteilchen ein Gemisch aus Styrol oder α-Methylstyrol und mindestens einem Comonomer aufgepfropft und dem so erhaltenen Copolymeren ein Polymer (b) auf übliche Weise zugemischt wird.

20. Verwendung der Komponente (a) nach Anspruch 1 zum Stabilisieren von Polymeren gegen Lichtschädigung.

## Claims

1. A polymer mixture comprising (a) a copolymer made from styrene or α-methylstyrene and at least one comonomer, where the copolymer contains crosslinked elastomer particles which have been modified by copolymerisation with an unsaturated derivative of a sterically hindered amine, and (b) a thermoplastic polymer which is reactive towards bases.

2. A polymer mixture according to claim 1, wherein component (a) is a graft copolymer of styrene or α-methylstyrene and at least one comonomer on the modified crosslinked elastomer.

3. A polymer mixture according to claim 1, wherein the comonomer in component (a) is acrylonitrile or an alkyl acrylate or alkyl methacrylate having 1 to 4 carbon atoms in the alkyl moiety.

4. A polymer mixture according to claim 1, wherein the elastomer particles in component (a) comprise a butadiene-acrylonitrile copolymer, butadiene-styrene copolymer, ethylene-propylene-diene terpolymer, polybutyl acrylate or polybutadiene.

5. A polymer mixture according to claim 1, wherein the sterically hindered amine is a copolymerisable, unsaturated derivative of 2,2,6,6-tetramethylpiperidine.

6. A polymer mixture according to claim 5, wherein the unsaturated derivative of 2,2,6,6-tetramethylpiperidine is a compound of the formula I 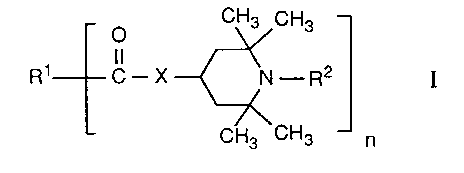 in which n is 1 or 2 and X is -O- or -N(R³)-, R¹, in the case where n = 1, is C₁-C₁₈alkyl, C₂-C₂₀alkenyl, C₅-C₈cycloalkyl, C₇-C₉phenylalkyl, phenyl, phenyl which is substituted by halogen, C₁-C₄alkyl or C₁-C₄alkoxy, or an R⁴OOC-CH=CH- group, and, in the case where n = 2, is C₂-C₁₀alkylene, vinylene, C₆-C₁₂arylene or cyclohexylene, R² is hydrogen, C₁-C₁₂alkyl, C₃-C₅alkenyl, C₇-C₉phenylalkyl, C₁-C₁₈alkoxy, -O-, C₅-C₈cycloalkoxy, C₇-C₉phenylalkoxy, C₂-C₁₀alkanoyl, C₃-C₆alkenoyl or a group of the formula III 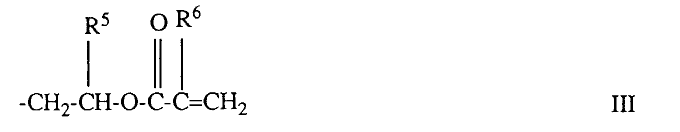 R³ is hydrogen, C₁-C₁₂alkyl or C₅-C₈cycloalkyl, R⁴ is hydrogen or C₁-C₁₂alkyl, R⁵ is hydrogen, CH₃ or CN, and R⁶ is hydrogen, C₁-C₁₂alkyl or phenyl, where at least one of the substituents R¹ and R² contains an ethylenic double bond.

7. A polymer mixture according to claim 5, wherein the unsaturated derivative of 2,2,6,6-tetramethylpiperidine is a compound of the formula II 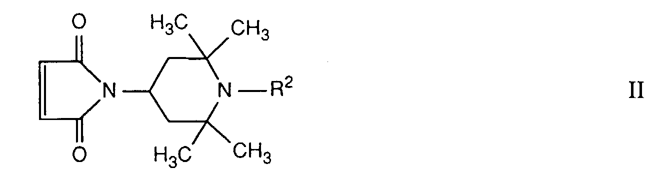 in which R² is hydrogen, C₁-C₁₂alkyl, C₃-C₅alkenyl, C₇-C₉phenylalkyl, C₁-C₁₈alkoxy, -O-, C₅-C₈cycloalkoxy, C₇-C₉phenylalkoxy or C₂-C₁₀alkanoyl.

8. A polymer mixture according to claim 5, wherein the unsaturated derivative of 2,2,6,6-tetramethylpiperidine is a compound of the formula I in which n is 1, X is -O-, R¹ is C₂-C₅alkenyl and R² is hydrogen, C₁-C₄alkyl, allyl, benzyl or acetyl.

9. A polymer mixture according to claim 5, wherein the unsaturated derivative of 2,2,6,6-tetramethylpiperidine is a compound of the formula I in which n is 1 or 2, X is -O-, R¹, in the case where n = 1, is C₁-C₁₈alkyl, cyclohexyl or phenyl and, in the case where n = 2, is C₂-C₈alkylene, and R² is C₃-C₆alkenoyl.

10. A polymer mixture according to claim 5, wherein the unsaturated derivative of 2,2,6,6-tetramethylpiperidine is a compound of the formula I in which n is 1, X is -O-, R¹ is C₂-C₅alkenyl and R² is a group of the formula III in which R⁵ and R⁶ are hydrogen or CH₃.

11. A polymer mixture according to claim 5, wherein the unsaturated derivative of 2,2,6,6-tetramethylpiperidine is 1,2,2,6,6-pentamethyl-4-acryloyloxypiperidine.

12. A polymer mixture according to claim 1, wherein component (b) is polycarbonate, polyamide, polyester, polyvinyl chloride, polyphenylene oxide, thermoplastic polyurethane or styrene-maleic anhydride copolymer, or a mixture of these polymers.

13. A polymer mixture according to claim 12, wherein component (b) is polycarbonate.

14. A polymer mixture according to claim 1, wherein component (a) makes up from 5 to 95 per cent by weight of the polymer mixture.

15. A polymer mixture according to claim 14, wherein component (a) makes up from 10 to 50 per cent by weight of the polymer mixture.

16. A polymer mixture according to claim 1, which contains, as a further component (c), a UV absorber.

17. A polymer mixture according to claim 16, wherein component (c) is a 2-(2'-hydroxyphenyl)benzotriazole.

18. A process for the preparation of a polymer mixture according to claim 1, which comprises mixing components (a) and (b) with one another in a conventional manner.

19. A process according to claim 18, wherein first an unsaturated derivative of a sterically hindered amine is grafted onto the elastomer particles, a mixture of styrene or α-methylstyrene and at least one comonomer is grafted onto the elastomer particles modified in this way, and a polymer (b) is admixed with the resultant copolymer in a conventional manner.

20. The use of component (a) according to claim 1 for stabilising polymers against photodegradation.

## Revendications

1. Composition de polymères contenant (a) un copolymère de styrène ou d'α-méthylstyrène et d'au moins un comonomère, ledit copolymère contenant des particules d'élastomère réticulé qui sont modifiées par copolymérisation avec un dérivé insaturé d'une amine à empêchement stérique, et (b) un polymère thermoplastique réactif avec des bases.

2. Composition de polymères selon la revendication 1, caractérisée en ce que le composant (a) est un copolymère greffé de styrène ou α-méthylstyrène et d'au moins un comonomère sur l'élastomère réticulé modifié.

3. Composition de polymères selon la revendication 1, caractérisée en ce que le comonomère dans le composant (a) est un acrylonitrile ou un acrylate d'alkyle comportant de 1 à 4 atomes de carbone dans la partie alkyle.

4. Composition de polymères selon la revendication 1, caractérisée en ce que les particules d'élastomère dans le composant (a) se composent d'un copolymère butadiène-acrylonitrile, d'un copolymère butadiène-styrène, d'un terpolymère éthylène-propylène-diène, de polyacrylate de butyle ou de polybutadiène.

5. Composition de polymères selon la revendication 1, caractérisée en ce que l'amine à empêchement stérique est un dérivé insaturé copolymérisable de la 2,2,6,6-tétraméthylpipéridine.

6. Composition de polymères selon la revendication 5, caractérisée en ce que le dérivé insaturé de la 2,2,6,6-tétraméthylpipéridine est un composé de formule I 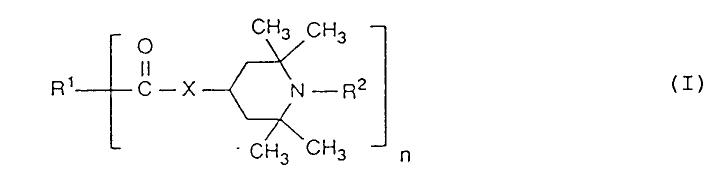 dans laquelle n est égal à 1 ou 2, et X signifie -O- ou -N(R³)-,
R¹ lorsque n=1, signifie un alkyle en C₁-C₁₈, un alcényle en C₂-C₂₀, un cycloalkyle en C₅-C₈, un phénylalkyle en C₇-C₉, un phényle, un phényle substitué par un halogène, un alkyle en C₁-C₄ ou un alcoxy en C₁-C₄, ou bien un groupe R⁴OOC-CH=CH-, et, lorsque n=2, un alkylène en C₂-C₁₀, un vinylène, un arylène en C₆-C₁₂ ou le cyclohexylène,
R² signifie l'hydrogène, un alkyle en C₁-C₁₂, un alcényle en C₃-C₅, un phénylalkyle en C₇-C₉, un alcoxy en C₁-C₁₈, -O•, un cycloalcoxy en C₅-C₈, un phénylalcoxy en C₇-C₉, un alcanoyle en C₂-C₁₀, un alcénoyle en C₃-C₆ ou un groupe de formule III 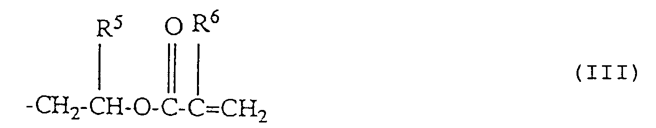
R³ signifie l'hydrogène, un alkyle en C₁-C₁₂ ou un cycloalkyle en C₅-C₈,
R⁴ signifie l'hydrogène ou un alkyle en C₁-C₁₂,
R⁵ signifie l'hydrogène, CH₃ ou CN,
R⁶ signifie l'hydrogène, un alkyle en C₁-C₁₂ ou le phényle,
au moins un des substituants R¹ et R² contenant une double liaison éthylénique.

7. Composition de polymères selon la revendication 5, caractérisée en ce que le dérivé insaturé de la 2,2,6,6-tétraméthylpipéridine est un composé de formule II 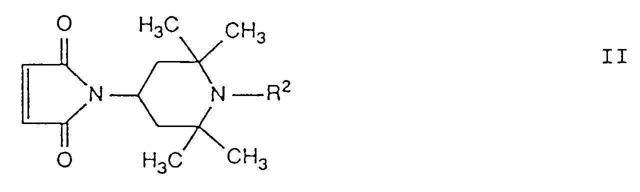 dans laquelle R² signifie l'hydrogène, un alkyle en C₁-C₁₂, un alcényle en C₃-C₅, un phénylalkyle en C₇-C₉, un alcoxy en C₁-C₁₈, -O•, un cycloalcoxy en C₅-C₈, un phénylalcoxy en C₇-C₉ ou un alcanoyle en C₂-C₁₀.

8. Composition de polymères selon la revendication 5, caractérisée en ce que le dérivé insaturé de la 2,2,6,6-tétraméthylpipéridine est un composé de formule I dans laquelle n vaut 1, X est -O-, R¹ est un alcényle en C₂-C₅ et R² est l'hydrogène, un alkyle en C₁-C₄, un allyle, un benzyle ou un acétyle.

9. Composition de polymères selon la revendication 5, caractérisée en ce que le dérivé insaturé de la 2,2,6,6-tétraméthylpipéridine est un composé de formule I dans laquelle n vaut 1 ou 2, X est -O-, R¹, lorsque n=1, représente un alkyle en C₁-C₁₈, un cyclohexyle ou un phényle et lorsque n=2, un alkylène en C₂-C_{8,} et R² signifie un alcénoyle en C₃-C₆.

10. Composition de polymères selon la revendication 5, caractérisée en ce que le dérivé insaturé de la 2,2,6,6-tétraméthylpipéridine est un composé de formule I dans laquelle n vaut 1, X est -O-, R¹ est un alcényle en C₂-C₅ et R² est un groupe de formule III dans lequel R⁵ et R⁶ signifient l'hydrogène ou CH₃.

11. Composition de polymères selon la revendication 5, caractérisée en ce que le dérivé insaturé de la 2,2,6,6-tétraméthylpipéridine est la 1,2,2,6,6-pentaméthyl-4-acryloyloxypipéridine.

12. Composition de polymères selon la revendication 1, caractérisée en ce que le composant (b) est un polycarbonate, un polyamide, un polyester, le poly(chlorure de vinyle), le poly(oxyphénylène), un polyuréthanne thermoplastique ou un copolymère de styrène-anhydride maléique ou bien aussi un mélange de ces polymères.

13. Composition de polymères selon la revendication 12, caractérisée en ce que le composant (b) est un polycarbonate.

14. Composition de polymères selon la revendication 1, caractérisée en ce que le composant (a) représente de 5 à 95% de la composition de polymères.

15. Composition de polymères selon la revendication 1, caractérisée en ce que le composant (a) représente de 10 à 50% de la composition de polymères.

16. Composition de polymères selon la revendication 1, caractérisée en ce qu'elle contient en plus comme composant (c) un absorbeur d'UV.

17. Composition de polymères selon la revendication 16, caractérisée en ce que le composant (c) est un 2-(2'-hydroxyphényl)-benztriazole.

18. Procédé de préparation de la composition de polymères selon la revendication 1, caractérisé en ce que l'on mélange de façon usuelle les composants (a) et (b) l'un à l'autre.

19. Procédé selon la revendication 18, caractérisé en ce que l'on greffe d'abord un dérivé d'une amine à empêchement stérique sur les particules d'élastomère, sur les particules d'élastomère ainsi modifiées, on greffe un mélange de styrène ou α-méthylstyrène et d'au moins un comonomère et on mélange de façon usuelle un polymère (b) au copolymère ainsi obtenu.

20. Utilisation du composant (a) selon la revendication 1 pour stabiliser des polymères contre la dégradation induite par la lumière.
